# EUROPEAN PATENT APPLICATION

(11) **EP 1 132 124 A2**
(43) Date of publication of application: **12.09.2001**
(21) Application number: 01302058.1
(22) Date of filing: 06.03.2001
(51) Int. Cl.: A63F 13/12

(54) **Communication system, entertainment apparatus, recording medium, and program**

(30) Priority: 06.03.2000 JP 2000060933; 02.03.2001 JP 2001058449
(71) Applicant: Sony Computer Entertainment Inc., Tokyo 107-0052 (JP)
(72) Inventor: Takatsuka, Susumu, Minato-ku, Tokyo 107-0052 (JP); Miyaki, Satoru, Minato-ku, Tokyo 107-0052 (JP); Matsumoto, Shingo, Minato-ku, Tokyo 107-0052 (JP)
(74) Representative: Turner, James Arthur

(57) **Abstract**

An entertainment apparatus has an access image rendering unit (302) for expressing an access to and from a server (14) when the entertainment apparatus (16) accesses and is accessed by the server (14), with an image, such as a ship (204) as it moves, symbolizing the access, on the display unit (24), an action/conversation processing unit (304) for displaying at least one object, as it acts and converses, on the display unit (24), an image displaying unit (306) for outputting 3D image data stored in a frame buffer (84) to the display monitor (24) to display an image thereon, a response processing unit (310) for registering response information from the user with respect to a conversation with the object in a transmission file (308), and a transmission/reception processing unit (312) for receiving information from the server (14) and transmitting information registered in the transmission file (308) to the server (14).

## Description

The present invention relates to a communication system for exchanging information via a network, an entertainment apparatus for use by a client in the communication system, a recording medium storing a program and data for use by the entertainment apparatus, and a program for realizing the communication system.

Some entertainment systems including entertainment apparatus such as video game machines display video game images based on video game data stored in a recording medium such as a CD-ROM or the like on the display screen of a television receiver while allowing the user or game player to play the video game with commands entered via a manual controller.

In those entertainment systems, the entertainment apparatus and the manual controller are usually connected to each other by a serial interface. When a clock signal is supplied from the entertainment apparatus to the manual controller, the manual controller sends key switch information based on the user's control entries in synchronism with the clock signal.

Recently developed manual controllers incorporate a vibration generating means for applying vibrations to the user based on a request from an external apparatus such as an entertainment apparatus, for example. While a video game is in progress, the vibration generating means applies various different kinds of vibrations to the user in response to user's different control entries.

As networks, particularly the Internet, are more widely used, users can easily obtain information transmitted from servers via computers, and can send messages easily to other parties using electronic mail. Users can not only receive information, but also send information to servers.

The widespread usage of networks allows users to acquire information easily and quickly and also permits users, in office or at home, to obtain various information in the form of text, image, and sound data from various countries all over the world.

A user can obtain information via a network by connecting the user's computer to the network. If desired information is in the form of text data, then the user can obtain the information by connecting the computer to the network for a short period of time. If information to be obtained is in the form of image data or sound data or both, then since the user need to connect the computer to the network for a long period of time, the user is required to attend to the computer during that period, and also to pay increased communication expenses.

It has heretofore been proposed to connect the user's computer to a network for a short period of time, and receive information from a server and send information from the user during the connection for the short period of time (for example, see Japanese laid-open patent publications Nos. 11-46193 and 9-269923).

According to another conventional proposal, information obtained from a server via a network is given to the user through a character displayed on a display monitor (for example, see Japanese laid-open patent publication No. 11-242546).

However, since the connection to a server is indicated to the user by only a message such as "CONNECTED" displayed on the display monitor, the user finds it boring to confirm the connection.

When the user wants to see information transmitted via a character, the user clicks on a dedicated icon to open another window. The process is not essentially different from the process of ordinary electronic mail software, and tends to fail to keep the user interested.

Various respective aspects and features of the invention are defined in the appended claims.

Embodiments of the invention can provide a communication system, an entertainment apparatus, a recording medium, and a program which indicate the connection to a server with an image symbolizing an access, rather than a message, thereby allowing the user to find it fun to exchange information using a network.

Embodiments of the present invention can provide a communication system, an entertainment apparatus, a recording medium, and a program which allow the user to exchange information while conversing with a character displayed on a display monitor to keep the user interested in communication software using a network.

According to the present invention, there is provided a communication system comprising a server connected to a network, an entertainment apparatus accessible to and from the server via the network, and a display unit connected to the entertainment apparatus, the entertainment apparatus comprising access image rendering means for expressing an access to and from the server when the entertainment apparatus accesses and is accessed by the server, with an image symbolizing the access, on the display unit.

According to the present invention, there is also provided an entertainment apparatus accessible to and from the server via the network, with a display unit being connectable to the entertainment apparatus, comprising access image rendering means for expressing an access to and from the server when the entertainment apparatus accesses and is accessed by the server, with an image symbolizing the access, on the display unit.

According to the present invention, there is also provided a recording medium storing a program and data for use in an entertainment apparatus accessible to and from the server via the network, the program comprising the step of expressing an access to and from the server when the entertainment apparatus accesses and is accessed by the server, with an image symbolizing the access, on a display unit connected the entertainment apparatus.

According to the present invention, there is also provided a program readable and executable by a computer, for use in an entertainment apparatus accessible to and from the server via the network, the program comprising the step of expressing an access to and from the server when the entertainment apparatus accesses and is accessed by the server, with an image symbolizing the access, on a display unit connected the entertainment apparatus.

With the above arrangement, a connection to the server is indicated by an image symbolizing an access, rather than a simple message, so that an element of fun is added to the exchange of information using the network. The image symbolizing an access may be displayed on a real-time basis in a period in which the server is connected to the entertainment apparatus, or at any desired time after the connection of the server to the entertainment apparatus is over.

In the communication system, the entertainment apparatus further comprises user information acquisition processing means for displaying at least one object on the display unit and transmitting response information of a user acquired via a conversation between the object and the user to the server, and wherein the server comprises information providing means for extracting information matching the response information of the user from information acquired via the network, and transmitting the extracted information to the entertainment apparatus of the user.

The entertainment apparatus further comprises user information acquisition processing means for displaying at least one object on the display unit, transmitting response information of a user acquired via a conversation between the object and the user to the server, and receiving information matching the response information of the user transmitted from the server.

In the recording medium, the program further comprises the steps of displaying at least one object on the display unit, transmitting response information of a user acquired via a conversation between the object and the user to the server, and receiving information matching the response information of the user transmitted from the server.

The program further comprises the steps of displaying at least one object on the display unit, transmitting response information of a user acquired via a conversation between the object and the user to the server, and receiving information matching the response information of the user transmitted from the server.

The user can exchange information while conversing with a character displayed on the display unit, and can continuously be interested in communication software using the network.

Since information received from the server is processed and expressed as a conversation with the character, if the information from the server is temporarily stored in the entertainment apparatus, the entertainment apparatus does not need to be continuously connected to the server. Thus, the time required to access to the server and the entertainment apparatus can be shortened.

Inasmuch as information received from the server is expressed as a conversation with the character, the information may be mainly in the form of text data, and data such as image data which is relatively time-consuming to exchange does not need to be exchanged. This allows the time required to access to the server and the entertainment apparatus to be further shortened. The conversation made by the object may be accompanied by the outputting of a sound. In this case, it is preferable to carry out speech synthesis in the entertainment apparatus.

If the conversation is of a question type from the object to the user, then the user information acquisition processing means or step may comprise means for, or the step of, transmitting information including a question from the object and a response from the user, as the response information of the user, to the server, and the information providing means or step may comprise means for, or the step of, extracting information matching the response from the extracted information.

The user information acquisition processing means or step may comprise disclosure permission/inhibition determining means for, or the steps of, asking the user about whether the response can be disclosed or not, and transmitting the response information of the user to the server if a disclosure permission from the user is recognized.

The user information acquisition processing means or step may comprise action/conversation processing means for, or the step of, displaying the at least one object while acting and conversing on the display unit, response processing means for, or the step of, registering the response information of the user with respect to a conversation of the object in a transmission file, and transmission/reception processing means for, or the step of, receiving information from the server and transmitting the information registered in the transmission file to the server.

The action/conversation processing means or step may comprise special action/conversation processing means for, or the step of, receiving information that has been received and displaying mainly an action and a conversation to be indicated to the user when the image symbolizing the access to and from the server is displayed, normal action/conversation processing means for, or the step of, displaying mainly a normal action and a normal conversation with the user based on information stored in the entertainment apparatus.

The response processing means or step may comprise means for, or the steps of, collecting keywords contained in the response information of the user, generating a table of the collected keywords arranged according to a predetermined rule, and registering the table in the transmission file, and the information providing means or step may comprise means for, or the step of, referring to the table contained in the transmission file transmitted from the entertainment apparatus to extract the information.

The present invention will be described further, by way of example only, with reference to preferred embodiments thereof as illustrated in the accompanying drawings in which:
FIG. 1 is a block diagram of a communication system according to the present invention;
FIG. 2 is a perspective view of an entertainment apparatus and peripheral devices connected thereto;
FIG. 3 is a block diagram of a circuit arrangement of the entertainment apparatus;
FIG. 4 is a block diagram of a circuit arrangement of a manual controller connected to the entertainment apparatus;
FIG. 5 is a schematic perspective view of a server;
FIG. 6 is a view showing a scene in which characters play and converse with each other and a character converses with the user;
FIG. 7 is a view showing an image symbolizing the connection of the entertainment apparatus to the server, i.e., a scene in which a ship is moving;
FIG. 8 is a view showing a scene in which a character runs toward a ship that has arrived at a harbor;
FIG. 9 is a view showing a scene in which a character has received newly arrived information and expresses the information in a conversation;
FIG. 10 is a functional block diagram of a user information acquisition processing means that operates on the entertainment apparatus;
FIG. 11 is a diagram showing details of a conversation information table;
FIG. 12 is a diagram showing details of a question information table;
FIG. 13 is a diagram showing details of a keyword table;
FIG. 14 is a diagram showing details of a response data file;
FIG. 15 is a diagram showing details of a normal action information table (special action information table);
FIG. 16 is a functional block diagram of an information providing means that operates on the server;
FIG. 17 is a flowchart of a processing sequence of the user information acquisition processing means;
FIGS. 18 through 20 are a flowchart of a processing sequence of a normal action/conversation processing means;
FIG. 21 is a flowchart of a processing sequence of a transmission/reception processing means;
FIG. 22 is a flowchart of a processing sequence of a response processing means;
FIGS. 23 through 26 are a flowchart of a processing sequence of a special action/conversation processing means;
FIG. 27 is a flowchart of a processing sequence of the information providing means;
FIG. 28 is a flowchart of a processing sequence of a reception processing means; and
FIGS. 29 through 31 are a flowchart of a processing sequence of a transmission processing means.

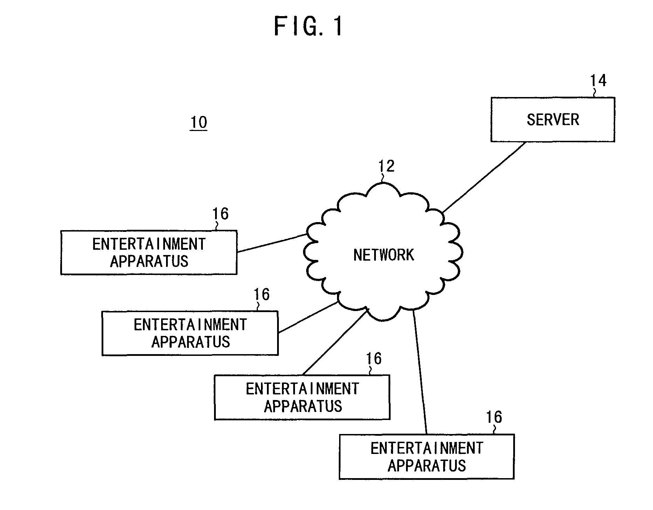

A communication system, an entertainment apparatus, a recording medium, and a program according to the present invention will be described below with reference to FIGS. 1 through 31.

As shown in FIG. 1, a communication system 10 according to the present invention comprises a server 14 connected to a network 12 and a plurality of entertainment apparatus 16 accessible to and from the server 14 via the network 12.

In the illustrated embodiment, the network 12 comprises the Internet, and the server 14 comprises a certain Web site, i.e., a Web server having a home page. A user connected to the Internet 12 can browse information in a hyper-text format of the Internet via the WWW (World Wide Web).

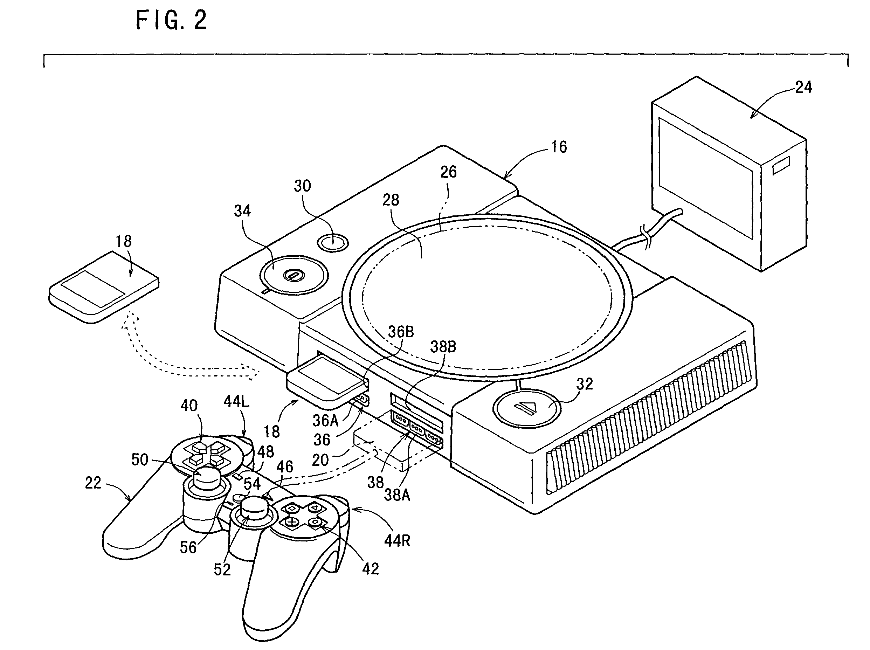

As shown in FIG. 2, the entertainment system 10 has a memory card 18 detachably connected to the entertainment apparatus 16, a manual controller 22 detachably connected to the entertainment apparatus 16 by a connector 20, and a display monitor 24 such as a television receiver which is supplied with video and audio output signals from the entertainment apparatus 16.

The entertainment apparatus 16 reads a program recorded in a mass storage medium such as an optical disk 26 such as a CD-ROM or the like, and executes a game, for example, based on the program depending on commands supplied from the user, e.g., the game player, via the manual controller 22. The execution of the game mainly represents controlling the progress of the game by controlling the display of images and the generation of sounds on the display monitor 24 based on manual input actions entered from the manual controller 22 via the connector 20.

The entertainment apparatus 16 has a substantially flat casing in the shape of a rectangular parallelepiped which houses a disk loading unit 28 disposed centrally for loading an optical disk 26 which stores an application program and data for a video game or the like. The casing supports a reset switch 30 for resetting a program which is being presently executed, a disk control switch 32 for controlling the loading of the optical disk 26, a power supply switch 34, and two slots 36, 38.

The entertainment apparatus 16 may be supplied with the application program via a communication link, rather than being supplied from the optical disk 26 as the recording medium.

The slots 36, 38 have respective upper slot units 36B, 38B and respective lower slot units 36A, 38A. Two manual controllers 22 may be connected respectively to the lower slot units 36A, 38A, and memory cards 18 for storing flags indicative of interim game data may be connected respectively to the upper slot units 36B, 38B. The slots 36, 38 (the upper slot units 36B, 38B and the lower slot units 36A, 38A) are asymmetrically shaped to prevent the connectors 20 and the memory cards 18 from being inserted in the wrong direction.

The manual controller 22 has first and second control pads 40, 42, an L (Left) button 44L, an R (Right) button 44R, a start button 46, and a selection button 48. The manual controller 22 also has first and second swivel control knobs or joysticks 50, 52 for inputting analog control actions, a mode selection switch 54 for selecting control modes of the joysticks 50, 52, and a mode indicator 56 for indicating a selected control mode.

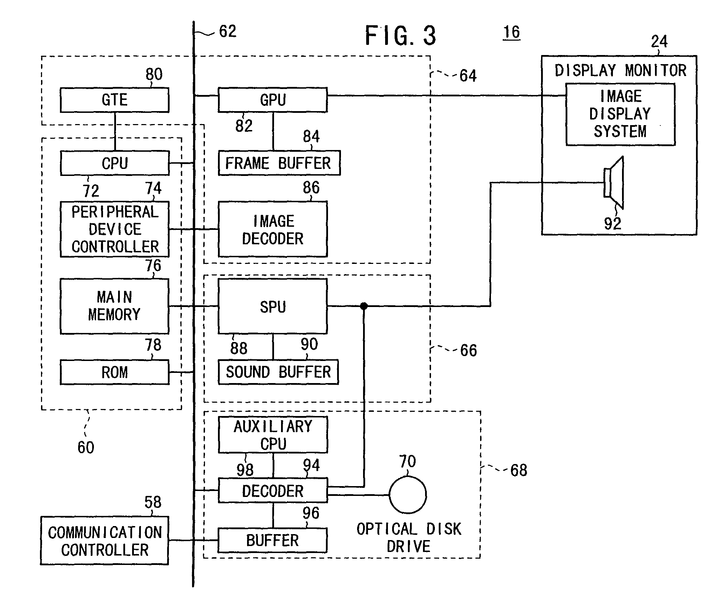

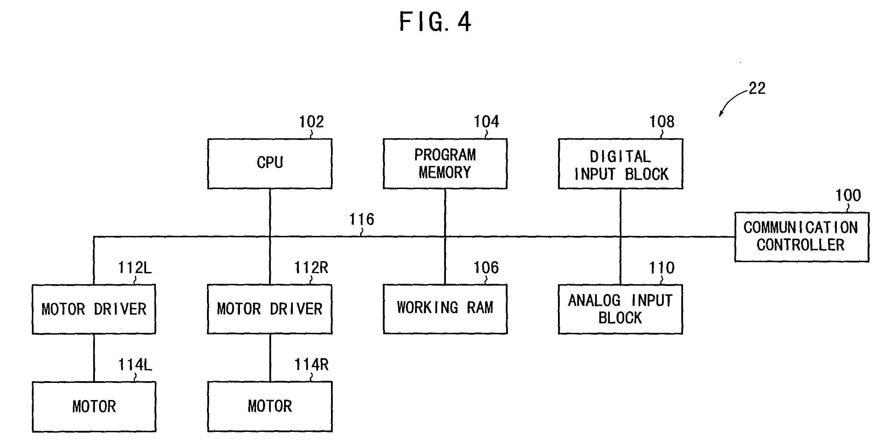

Circuit arrangements of the entertainment apparatus 16 and the manual controller 22 will be described below with reference to FIGS. 3 and 4.

As shown in FIG. 3, the entertainment apparatus 16 generally comprises a control system 60, a graphic generating system 64 connected to the control system 60 via a system bus 62, a sound generating system 66 connected to the control system 60 via the system bus 62, and an optical disk control system 68 connected to the control system 60 via the system bus 62. A communication controller 58 for controlling data to be inputted to and outputted from the manual controller 22 and the memory card 18 is also connected to the control system 60 via the system bus 62.

The manual controller 22 supplies commands (including control data) from the user via a communication controller 100 (see FIG. 4) of the manual controller 22 and the communication controller 58 to the entertainment apparatus 16. The optical disk control system 68 includes an optical disk drive 70 in which the optical disk 26, which may comprise a CD-ROM or the like as a specific example of a recording medium according to the present invention, is loaded.

The control system 60 controls motions of characters displayed on the display monitor 24 based on a program and data read from the optical disk 26 and commands supplied from the manual controller 22.

The control system 60 includes a central processing unit (CPU) 72, a peripheral device controller 74 for controlling interrupts and direct memory access (DMA) data transfer, a main memory 76, and a read-only memory (ROM) 78 which stores various programs such as an operating system for managing the graphic generating system 64, the sound generating system 66, etc. The main memory 76 can store at least a game program that is supplied from the optical disk 26 and executed by the CPU 72.

The CPU 72 controls the entertainment apparatus 16 in its entirety by executing the operating system stored in the ROM 78. The CPU 72 comprises a 32-bit RISC-CPU, for example.

When the entertainment apparatus 16 is turned on, the CPU 72 executes the operating system stored in the ROM 78 to start controlling the graphic generating system 64, the sound generating system 66, etc.

When the operating system is executed, the CPU 72 initializes the entertainment apparatus 16 in its entirety for confirming its operation, and thereafter controls the optical disc control system 68 to execute an application program such as a game program recorded in the optical disk 26.

As the application program such as a game program is executed, the CPU 72 controls the graphic generating system 64, the sound generating system 66, etc. depending on commands entered by the user for thereby controlling the display of images and the generation of music sounds and sound effects.

The graphic generating system 64 comprises a geometry transfer engine (GTE) 80 for performing coordinate transformations and other processing, a graphic processing unit (GPU) 82 for rendering image data according to instructions from the CPU 72, a frame buffer 84 for storing image data rendered by the GPU 82, and an image decoder 86 for decoding image data compressed and encoded by an orthogonal transform such as a discrete cosine transform.

The GTE 80 has a parallel arithmetic mechanism for performing a plurality of arithmetic operations parallel to each other, and can perform coordinate transformations and light source calculations, and calculate matrixes or vectors at a high speed in response to a request from the CPU 72.

Specifically, the GTE 80 can calculate the coordinates of a maximum of 1.5 million polygons per second for a flat shading process to plot one triangular polygon with one color, for example. With the GTE 80, the entertainment apparatus 16 is able to reduce the burden on the CPU 72 and perform high-speed coordinate calculations.

According to an image generating instruction from the CPU 72, the GPU 82 generates and stores the data of a polygon or the like in the frame buffer 84. The GPU 82 is capable of generating and storing a maximum of 360 thousand polygons per second.

The frame buffer 84 comprises a dual-port RAM, and is capable of simultaneously storing image data generated by the GPU 82 or image data transferred from the main memory 76, and reading image data for display. The frame buffer 84 has a storage capacity of 1 Mbytes, for example, and is handled as a matrix made up of a horizontal row of 1024 pixels and a vertical column of 512 pixels, each pixel comprising 16-bit data.

The frame buffer 84 has a display area for storing image data to be outputted as video output data, a CLUT (color look-up table) area for storing a color look-up table which will be referred to by the GPU 82 when it renders a polygon or the like, and a texture area for storing texture data to be subjected to coordinate transformations when a polygon is generated and mapped onto a polygon generated by the GPU 82. The CLUT area and the texture area are dynamically varied as the display area is varied.

The GPU 82 can perform, in addition to the flat shading process, a Gouraud shading process for determining colors in polygons by interpolating intensities from the vertices of the polygons, and a texture mapping process for mapping textures stored in the texture area onto polygons. For performing the Gouraud shading process or texture mapping process, the GTE 80 can perform coordinate calculations for a maximum of about 500,000 polygons per second.

The image decoder 86 is controlled by the CPU 72 to decode image data of a still or moving image stored in the main memory 76, and store the decoded image into the main memory 76.

Image data reproduced by the image decoder 86 is transferred to the frame buffer 84 by the GPU 82, and can be used as a background for an image plotted by the GPU 82.

The sound generating system 66 comprises a sound processing unit (SPU) 88 for generating music sounds, sound effects, etc. based on instructions from the CPU 72, and a sound buffer 90 for storing music sounds, sound effects, etc. generated by the SPU 88. Audio signals representing music sounds, sound effects, etc. generated by the SPU 88 are supplied to audio terminals of the monitor 24. The monitor 24 has a speaker 92 which radiates music sounds, sound effects, etc. generated by the SPU 88 based on the supplied audio signals.

The SPU 88 has an ADPCM (adaptive differential PCM) function for reproducing 16-bit audio data which has been encoded as 4-bit differential audio data by ADPCM, a reproducing function for reproducing waveform data stored in the sound buffer 90 to generate sound effects, etc., and a modulating function for modulating and reproducing the waveform data stored in the sound buffer 90.

The sound system 66 with these functions can be used as a sampling sound source which generates music sounds, sound effects, etc. based on the waveform data stored in the sound buffer 90 according to instructions from the CPU 72.

The optical disk control system 68 comprises an optical disk drive 70 for reproducing application programs and data recorded on the optical disk 26, a decoder 94 for decoding programs and data that are recorded with an error correcting code added thereto, and a buffer 96 for temporarily storing data read from the optical disk drive 70 so as to allow the data from the optical disk 26 to be read at a high speed. An auxiliary CPU 98 is connected to the decoder 94.

Audio data recorded on the optical disk 26 which is read by the optical disk drive 70 includes PCM data converted from analog sound signals, in addition to the ADPCM data.

The ADPCM data, which is recorded as 4-bit differential data of 16-bit digital data, is decoded by the decoder 94, supplied to the SPU 88, converted thereby into analog data, and applied to drive the speaker 92.

The PCM data, which is recorded as 16-bit digital data, is decoded by the decoder 94 and then applied to drive the speaker 92.

As shown in FIG. 4, the manual controller 22 comprises a communication controller 100, a CPU 102, a program memory 104, a working RAM 106, a digital input block 108, an analog input block 110, a left motor driver 112L, a left motor 114L, a right motor driver 112R, and a right motor 114R. These components of the manual controller 22 are connected to a bus 116.

The digital input block 108 functions as a manual input controller for the pressable control members of the first control pad 40 and the second control pad 42. The analog input block 110 functions as a manual input controller for the first and second joysticks 50, 52. The digital input block 108 and the analog input block 110 allow the user to enter various items of information into the manual controller 22.

The communication controller 100 has a function to effect serial communications with an external device. The communication controller 100 is electrically connectable to the communication controller 58 (see FIG. 3) of the entertainment apparatus 16, for example, for data communications with the entertainment apparatus 16.

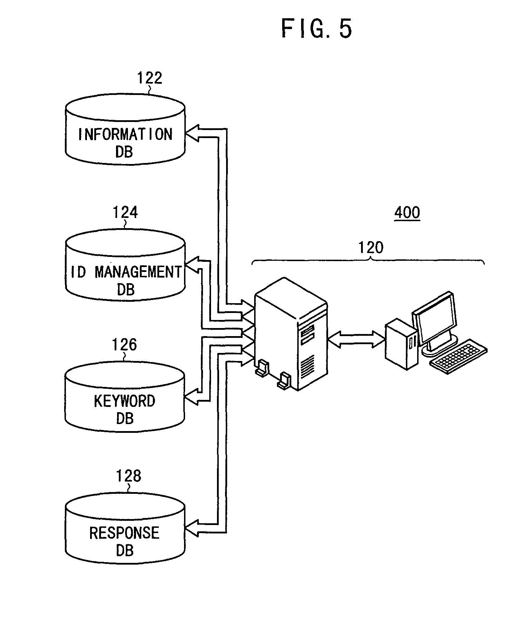

As shown in FIG. 5, the server 14 comprises a server unit 120 in the form of a personal computer, for example, and a plurality of databases, e.g., an information database 122, an ID management database 124, a keyword database 126, and a response database 128, connected to the server unit 120.

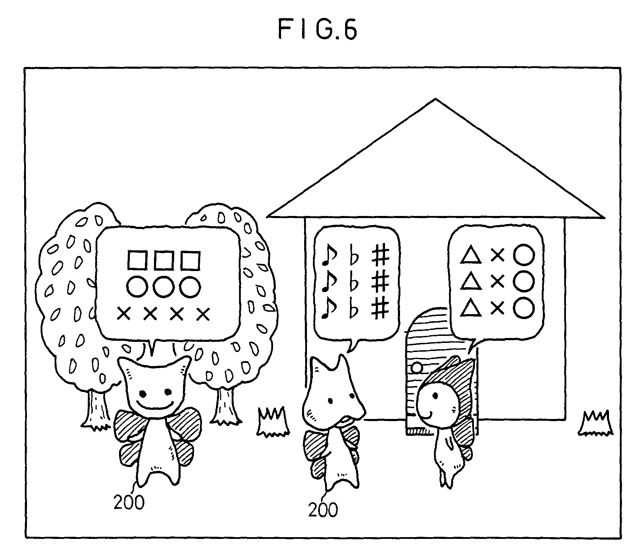

Two characteristic functions of the communication system 10 according to the present embodiment will be described below with reference to FIGS. 6 through 31.

The first function is for an entertainment apparatus 16 to display an image representing an access to and from the server 14 on the display monitor 24 connected to the entertainment apparatus 16 when the entertainment apparatus 16 accesses and is accessed by the server 14.

The second function is for an entertainment apparatus 16 to display at least one object on the display monitor 24 connected to the entertainment apparatus 16, and transmit at least one keyword obtained through a conversation between the object and the user to the server 14, and for the server 14 to extract information matching the keyword from the user from the information obtained via the network 12, and transmits the extracted information to the entertainment apparatus 16 of the user.

Specifically, the conversation between the user and the object (character) in the second function represents, as shown in FIG. 6, a conversation between characters 200 displayed as 3D (three-dimensional) polygons in one scene while the characters 200 are moving, e.g., playing, at random, and a question given from a character 200 to the user. Therefore, the user can easily empathize with a character 200 by seeing the motion of the character 200, and can enjoy a conversation with the character 200.

If the user gives an answer to a question that has been directed from a character 200 to the user, then the intimacy between the user and the character 200 increases, and the expression of the conversation between the user and the character 200 gradually changes.

Answers given by the user include those which the user does not want to be disclosed via the network 12. According to the second function, the user is asked as to whether an answer given by the user may be disclosed via the network 12 or not, and the answer is transmitted via the network 12 to the server 14 only when the user gives a permission to disclose the answer.

Since answers that are transmitted via the network 12 to the server 14 are limited, it is difficult for the server 14 to retrieve detailed information with respect to the user. However, the limited availability of answers is effective to prevent the privacy of the user from being violated through the network 12, and hence the user can use the communication system 10 with safety. Inasmuch as the user can use the communication system 10 with safety, various services for transmitting information via the network 12 are made available for widespread use.

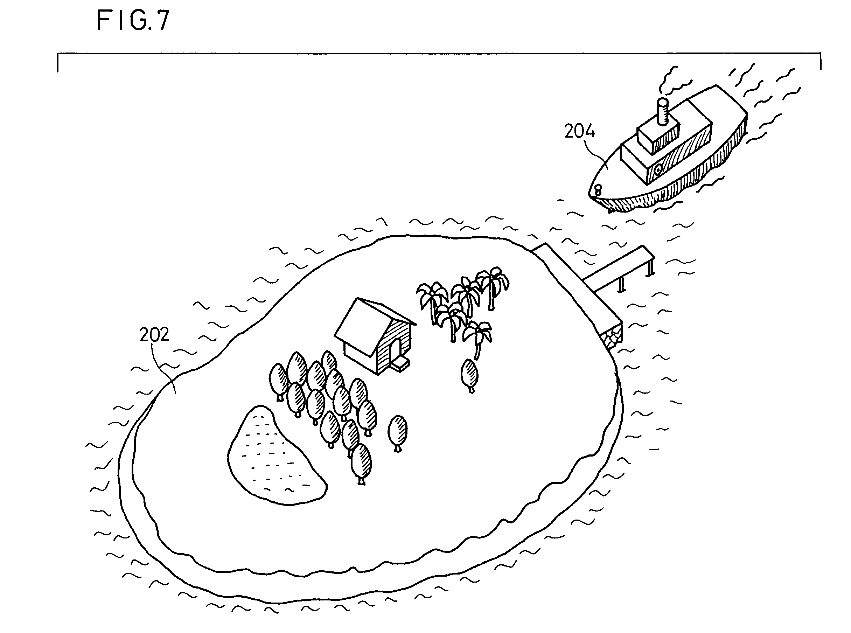

Images symbolizing an access to the server 14 according to the first function include a scene in which, as shown in FIG. 7, a ship 204 comes to an island 202 where a character 200 lives. Cargo and mail on the ship 204 corresponds to information received from the server 14 and information transmitted to the user.

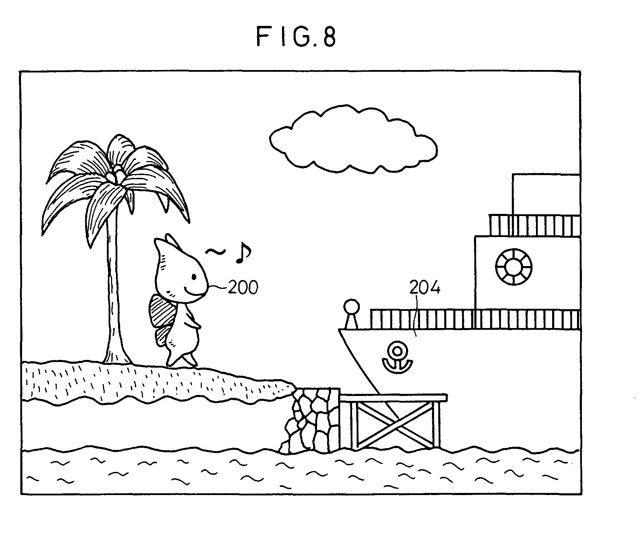

In the present embodiment, the scene in which the ship 204 comes to the island 202, as shown in FIG. 7, changes to a scene of a harbor shown in FIG. 8, displaying an image of the ship 204 arriving at the harbor and an image of the character 200 walking to the ship 204 while singing, as 3D polygons. At this time, another character 200 may be displayed together with a message "SHIP'S ARRIVED" displayed and outputted as a sound.

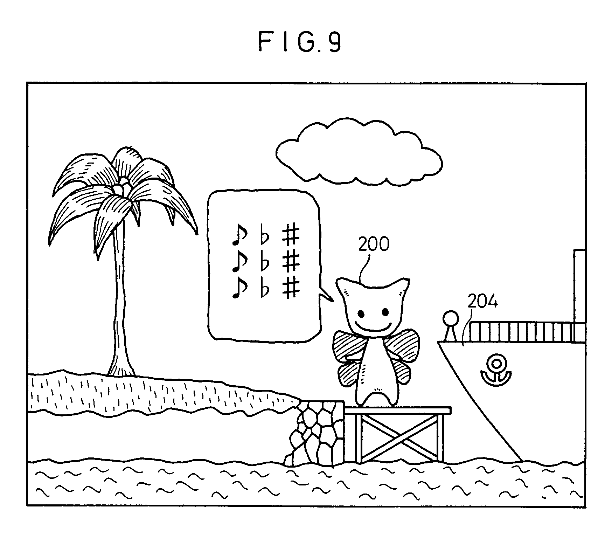

As shown in FIG. 9, an image is displayed in which a character 200 runs to the ship 204, confirming cargo and mail, and thereafter runs to other characters several seconds later, while at the same time telling the user newly arrived information which the user is interested in. A conversation which the character 200 has with other characters 200 may include other newly arrived information which is of interest to the user.

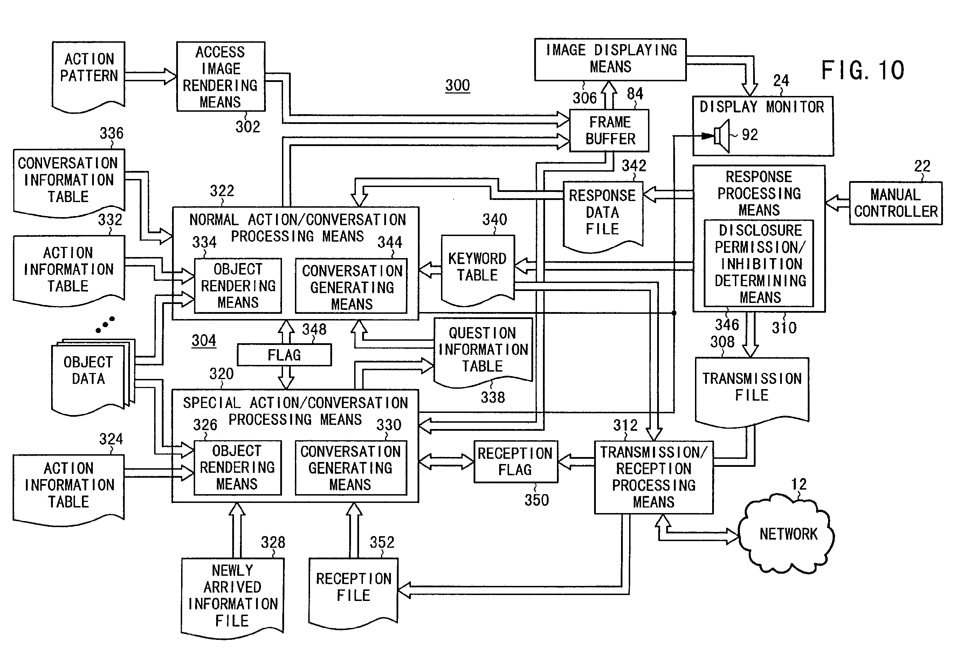

One example of software for performing the above first and second functions will be described below with reference to FIGS. 10 through 31. Objects hereinafter referred to represent all objects (including characters 200) appearing in scenes, and characters 200 represent those objects which perform conversations.

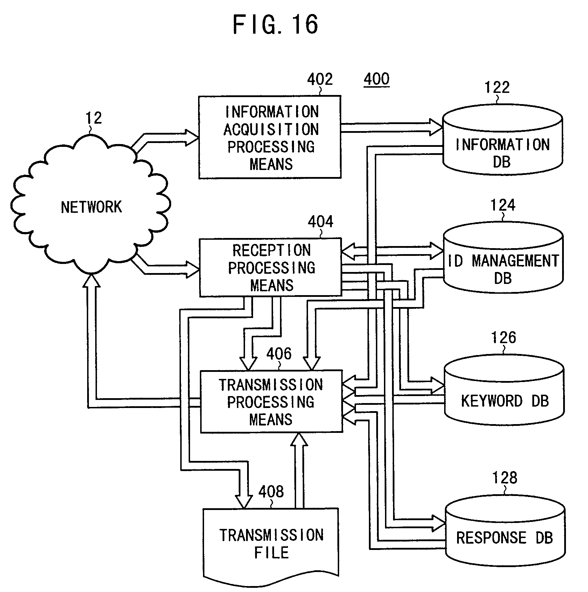

The software includes a user information acquisition processing means 300 (see FIG. 10) for displaying at least one object on the display monitor 24 and transmitting response information obtained via a conversation between the object and the user to the server 14, and an information providing means 400 (see FIG. 16) operable on the server 14 for extracting information matching the response information of the user from the information acquired via the network and transmitting the extracted information to the entertainment apparatus 16 of the user.

The user information acquisition processing means 300 can be supplied to the entertainment apparatus 16 from a randomly accessible recording medium such as the optical disk 26 or the memory card 18, or the network 12. It is assumed in the present embodiment that the user information acquisition processing means 300 is read from the optical disk 26.

The user information acquisition processing means 300 is downloaded in advance from the optical disk 26 played back by the entertainment apparatus 16 into the main memory 76 in the control system 60 thereof according to a predetermined process, and executed by the CPU 72 of the control system 60.

As shown in FIG. 10, the user information acquisition processing means 300 comprises an access image rendering means 302 for expressing an access to the server 14 when the entertainment apparatus 16 and the server 14 are accessed, with an image symbolizing such an access, such as the ship 204 as it moves, on the display monitor 24, an action/conversation processing means 304 for displaying at least one object as it acts and converses on the display monitor 24, an image displaying means 306 for outputting 3D image data stored in the frame buffer 84 to the display monitor 24 to display an image thereon, a response processing means 310 for registering response information from the user with respect to a conversation with the object in a transmission file 308, and a transmission/reception processing means 312 for receiving information from the server 14 and transmitting information registered in the transmission file 308 to the server 14.

The action/conversation processing means 304 comprises a special action/conversation processing means 320 for receiving information that has been received and displaying mainly an action and a conversation to be indicated to the user when an image symbolizing an access to and from the server 14 is displayed, and a normal action/ conversation processing means 322 for displaying mainly an action and a conversation with the user based on information stored in the entertainment apparatus 16.

The special action/conversation processing means 320 comprises a first object rendering means 326 for rendering a plurality of objects as 3D polygons according to a number of action patterns registered in a special action information table 324, and a first conversation generating means 330 for generating a conversation message based on newly arrived information registered in a newly arrived information file 328 when information is received, and rendering an image and outputting a sound.

An action pattern registered in the special action information table 324 represents an action in which, as shown in FIGS. 8 and 9, a character 200 runs to a harbor, receives information, transmits the information to the user, and converses with another character 200 with respect to a subject including a newly arrived information.

The normal action/conversation processing means 322 comprises a second object rendering means 334 for rendering a plurality of objects as 3D polygons according to a number of action patterns registered in a normal action information table 332, and a second conversation generating means 344 for generating a conversation message based on a conversation type registered in a conversation information table 336, a question registered in a question information table 338, various keywords registered in a keyword table 340, and user's responses to various questions registered in a response data file 342, and rendering an image and outputting a sound.

An action pattern registered in the normal action information table 332 represents an action in which, as shown in FIG. 6, a plurality of characters 200 converse with each other in a house or near a house.

The response processing means 310 has a disclosure permission/inhibition determining means 346 for asking the user about whether a response to a question from a character 200 can be disclosed or not, and transmitting response information of the user to the server 14 if a disclosure permission from the user is recognized.

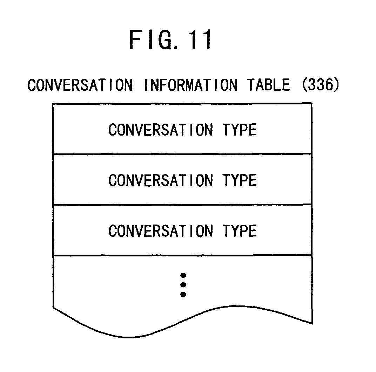

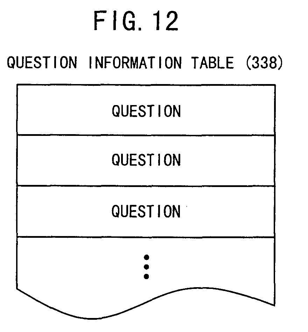

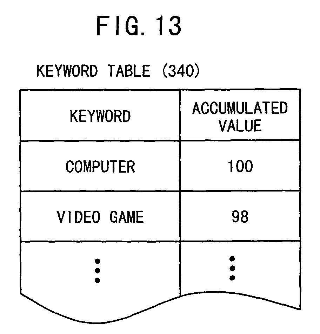

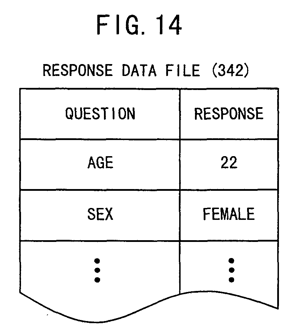

Details of the various tables and file will be described below. As shown in FIG. 11, the conversation information table 336 contains conversation types registered in respective records. As shown in FIG. 12, the question information table 338 contains questions registered in respective records. As shown in FIG. 13, the keyword table 340 contains keywords included in responses from the user and accumulated values indicating the number of times those keywords have appeared, the keywords and the accumulated values being registered in respective records. As shown in FIG. 14, the response data file 342 contains questions and responses from the user, which are registered in respective records.

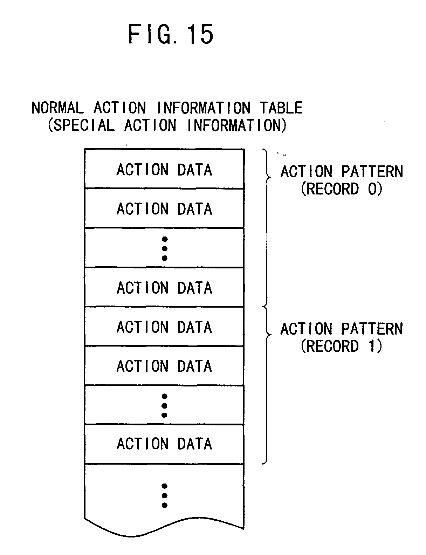

As shown in FIG. 15, each of the normal action information table 332 and the special action information table 324 contains action patterns registered in respective records. Each of the action patterns an array of action data.

The user information acquisition processing means 300 also uses, in addition to the above tables and file, a conversation continuation flag 348 indicative of whether a conversation made by a character 200 is being continued or not, and a reception flag 350 for informing of a reception, and a reception file 352 for temporarily storing received data from the server 14.

As shown in FIG. 16, the information providing means 400 of the server 14 comprises an information acquisition processing means 402 for periodically or temporarily acquiring new information via the network 12 and registering the information in the information database 122, a reception processing means 404 for registering received information in the keyword database 126 and the response database 128 if the received information is information related to a registered user, and a transmission processing means 406 for retrieving information matching a keyword and a response of each user and transmitting the retrieved information to the corresponding user.

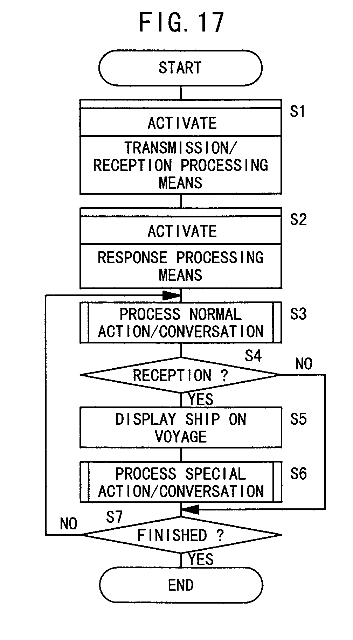

Processing sequences of the user information acquisition processing means 300 of the entertainment apparatus 16 and the information providing means 400 of the server 14 will be described below with reference to FIGS. 17 through 31.

In step S1 shown in FIG. 17, the user information acquisition processing means 300 activates the transmission/reception processing means 312. Then, the user information acquisition processing means 300 activates the response processing means 310 in step S2. The user information acquisition processing means 300, the transmission/reception processing means 312, and the response processing means 310 operate in a multitasking fashion. Processing sequences of the transmission/reception processing means 312 and the response processing means 310 will be described later on.

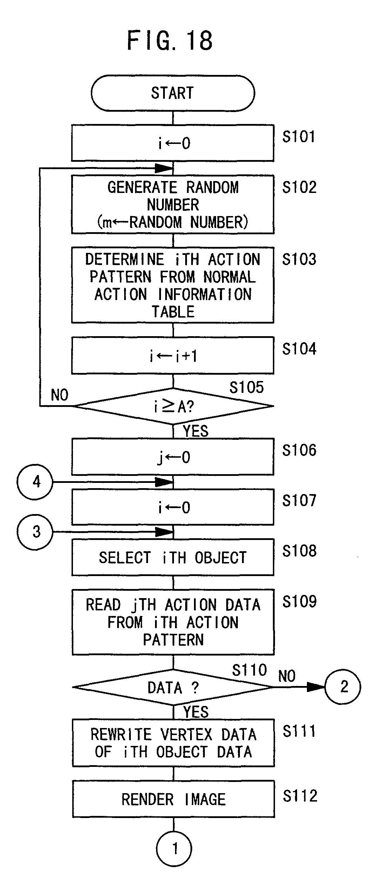

In step S3, the normal action/conversation processing means 322 performs its own processing sequence. In steps S101 - S112 shown in FIG. 18, the second object rendering means 334 of the normal action/conversation processing means 322 performs its own processing sequence. In step S101, the second object rendering means 334 stores an initial value "0" in an index register i used to retrieve objects, thus initializing the index register i.

In step S102, the second object rendering means 334 generates a random number in order to determine an action pattern with respect to an ith object. The generated random number is stored in a register m.

In step S103, the second object rendering means 334 reads an action pattern of an mth record from the normal action information table 332. The action pattern is defined as an ith action pattern.

In step S104, the second object rendering means 334 increments the value of the index register i by "1". Then, in step S105, the second object rendering means 334 determines whether the definition of action patterns for all objects has been finished or not, based on whether or not the value of the index register i is equal to or greater than the number A of objects.

If the value of the index register i is smaller than the number A of objects, then control goes back to step S102 to define a next action pattern. If the value of the index register i is equal to or greater than the number A of objects, then control goes to step S106 in which the second object rendering means 334 stores an initial value "0" in an index register j used to read action data, thus initializing the index register j. Thereafter, in step S107, the second object rendering means 334 stores an initial value "0" in the index register i, thus initializing the index register i.

In step S108, the second object rendering means 334 selects the ith object. In step S109, the second object rendering means 334 reads jth action data of the ith action pattern.

In step S110, the second object rendering means 334 determines whether jth action data is present or not. If jth action data is present, then control goes to step S111 in which the second object rendering means 334 rewrites the vertex data of ith object data according to the action data. Thereafter, in step S112, the second object rendering means 334 renders and stores an 3D image with respect to the ith object in the frame buffer 84.

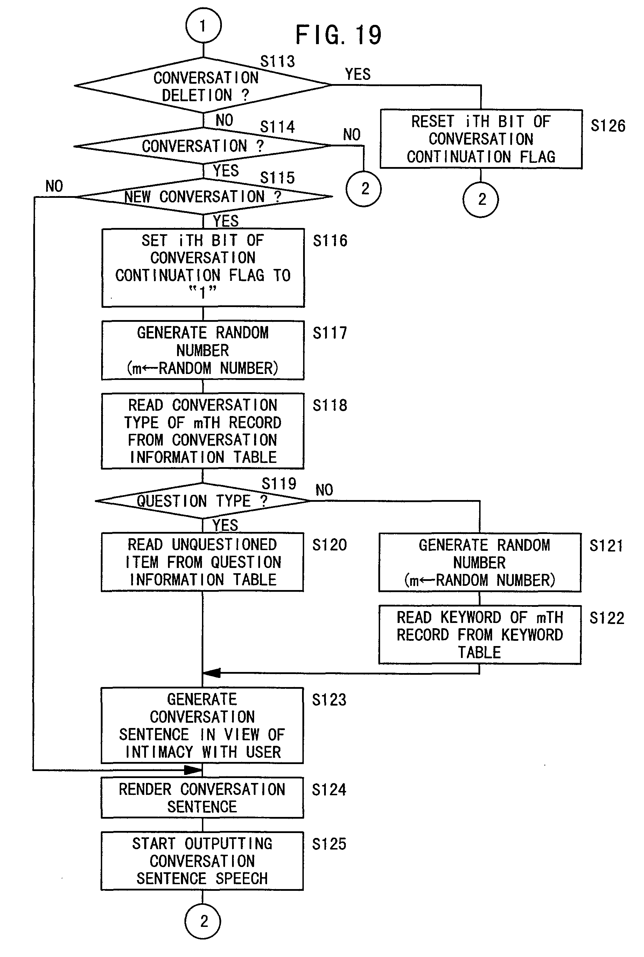

In steps S113 - S125 shown in FIG. 19, the second conversation generating means 344 performs its own processing sequence. In step S113, the second conversation generating means 344 determines whether the jth action data includes a conversation deletion or not. The conversation deletion represents an interruption of a conversation made by a character 200 or a switching to a next conversation.

If the jth action data does not include a conversation deletion, then control goes to step S114 in which the second conversation generating means 344 determines whether the jth action data includes a conversation or not, i.e., whether the action is accompanied by a conversation or not.

If the jth action data includes a conversation, then control goes to step S115 in which the second conversation generating means 344 determines whether the conversation is a new conversation or not, based on whether an ith bit of the conversation continuation flag 348 is "0" or not. If the conversation is a new conversation, then control goes to step S116 in which the second conversation generating means 344 sets the ith bit of the conversation continuation flag 348 to "1", indicating that the conversation continues.

In step S117, the second conversation generating means 344 generates a random number in order to determine a conversation type with respect to the ith object. The generated random number is stored in the register m. In step S118, the second conversation generating means 344 reads a conversation type of the mth record from conversation information table 336.

In step S119, the second conversation generating means 344 determines whether the read conversation type is a question type or not. If the conversation type is a question type, then control goes to step S120 in which the second conversation generating means 344 reads an unquestioned item from the question information table 338. If the conversation type is not a question type, then control goes to step S121 in which the second conversation generating means 344 generates a random number in order to determine a keyword. The generated random number is stored in the register m. In step 122, the second conversation generating means 344 reads a keyword of the mth record from the keyword table 340.

When the processing in step S120 or the processing in step S122 is finished, control goes to step S123 in which the second conversation generating means 344 generates a conversation message in view of the intimacy of the ith object with the user.

When the processing in step S123 is finished or if the conversation is determined as continuing in step S115, then control goes to step S124 in which the second conversation generating means 344 renders and stores the generated conversation message, including its utterance frame, in the frame buffer 84. Thereafter, in step S125, the second conversation generating means 344 starts outputting the sound of the conversation message. Therefore, the conversation message is uttered via the speaker 92 of the display monitor 24 substantially in synchronism with the display of an image (including the conversation message) in step S129, to be described below.

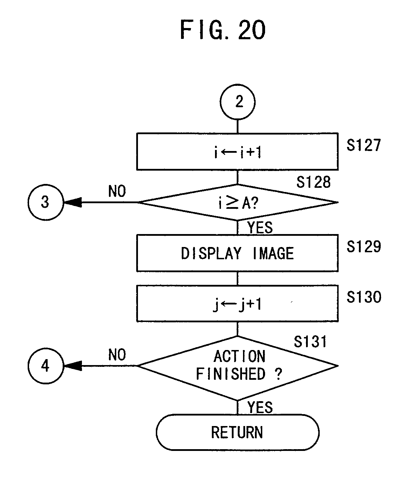

When the processing in step S125 is finished or if the action is determined as being accompanied by no conversation in step S114, control goes to step S127 shown in FIG. 20. If the jth action data is determined as including a conversation deletion in step S113 in FIG. 19, then control goes to step S126 in which the second conversation generating means 344 sets the ith bit of the conversation continuation flag 348 to "0", thus resetting the ith bit. Thereafter, control goes to step S127 shown in FIG. 20.

If jth action data is determined as being not present in step S110 in FIG. 18, then control also goes to step S127 shown in FIG. 20.

In step S127, the second object rendering means 334 increments the value of the index register i by "1". Then, in step S128, the second object rendering means 334 determines whether the image rendering process has been finished for all objects has been finished or not, based on whether or not the value of the index register i is equal to or greater than the number A of objects.

If the value of the index register i is smaller than the number A of objects, then control goes back to step S108 shown in FIG. 18 to perform a rendering process for a next object. If the value of the index register i is equal to or greater than the number A of objects, then control goes to step S129 in which the image displaying means 306 outputs 3D image data stored in the frame buffer 84 to the display monitor 24 to display an image.

In step S130, the second object rendering means 334 increments the value of the index register j by "1". Thereafter, in step S131, the second object rendering means 334 determines whether actions have been displayed and conversations have been outputted with respect to all objects or not.

If actions have not been displayed and conversations have not been outputted with respect to all objects, then control goes back to step S107 shown in FIG. 18 to perform a rendering process based on next action data. When the processing in steps S107 - S131 is repeated, objects appearing in a scene move as the viewpoint moves, and a character 200 moves randomly and/or converses with the user.

If actions have been displayed and conversations have been outputted with respect to all objects, then the processing sequence of the normal action/conversation processing means 322 is put to an end.

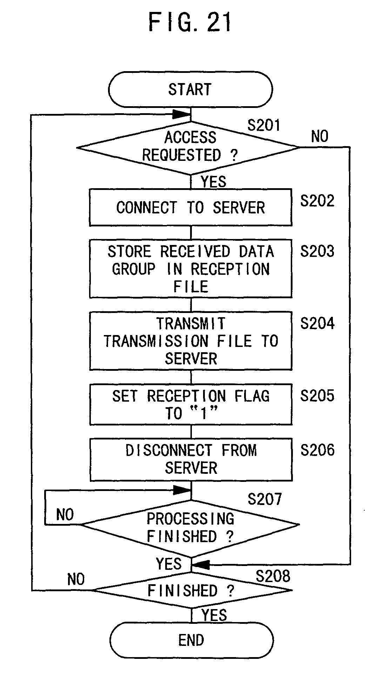

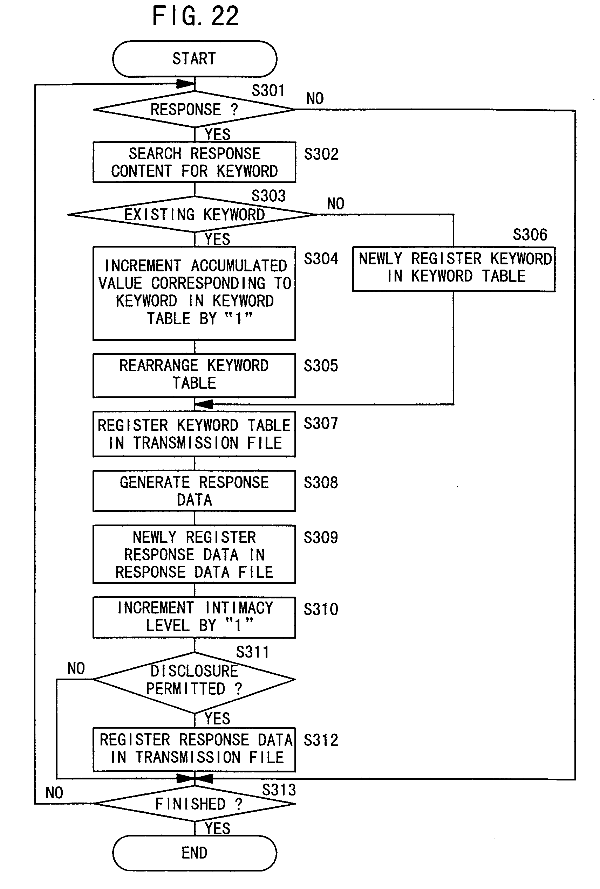

The processing sequences of the transmission/reception processing means 312 and the response processing means 310 will be described below with reference to FIGS. 21 and 22.

In step S201 shown in FIG. 21, the transmission/reception processing means 312 determines whether there is an access request for the server 14 or not, based on whether the present time is a time for the entertainment apparatus 16 to periodically or temporarily activate a Web browser to access the server 14 or not.

If the time to make an access request for the server 14 is reached and the Web browser is activated, then control goes to step S202 in which the transmission/ reception processing means 312 connects the entertainment apparatus 16 to the server 14. When the connection to the server 14 is completed, control goes to step S203 in which the transmission/reception processing means 312 stores a group of received data from the server 14 in a reception file 352.

In step S204, the transmission/reception processing means 312 transmits data presently registered in the transmission file 308 to the server 14. Thereafter, in step S205, the transmission/reception processing means 312 sets the reception flag 350 to "1", indicating that the reception is completed.

In step S206, the transmission/reception processing means 312 disconnects the entertainment apparatus 16 from the server 14. In step S207, the transmission/ reception processing means 312 waits for the completion of a receiving process (the processing sequence of the special action/conversation processing means 320). If the receiving process is completed or if there is no access request for the server 14 in step S201, then control goes to step S208 in which the transmission/reception processing means 312 determines whether there is a program end request for the transmission/reception processing means 312 or not. If there is no program end request, then control goes back to step S201 to repeat the processing from step S201. If there is a program end request, then the processing sequence of the transmission/reception processing means 312 is put to an end.

In step S301 shown in FIG. 22, the response processing means 310 determines whether there is a response from the user or not, based on whether there is an input from the manual controller 22 after a conversation of a question type has been outputted, or not.

If there is a response from the user, then control goes to step S302 in which the response processing means 310 searches the content of the response for a keyword in the keyword table 340. In step S303, the response processing means 310 determines whether the keyword is an existing keyword or not. If the keyword is an existing keyword, then control goes to step S304 in which the response processing means 310 increments the accumulated value for the keyword, among the keywords registered in the keyword table 340, by "1". In step S305, the response processing means 310 rearranges the keywords in the keyword table 340 according to the magnitudes of the accumulated values.

If the keyword is determined as a new keyword in step S303, then control goes to step S306 in which the response processing means 310 newly registers the present response content in the keyword table 340.

After the processing in step S305 or step S306, control goes to step S307 in which the keyword table 340 is registered in the transmission file 308.

In step S308, the response processing means 310 generates response data which comprises questions to the user and responses from the user. Thereafter, in step S309, the response processing means 310 registers the generated response data in the response data file 342.

In step S310, the response processing means 310 increments the intimacy with an object which has made a question by "1". Thereafter, in step S311, the disclosure permission/inhibition determining means 346 asks the user as to whether the response content can be disclosed or not. If the user gives a response to permit the disclosure of the response content, then control goes to step S312 in which the response processing means 310 registers the response data in the transmission file 308.

After the processing in step S312, or if the user gives a response to inhibit the disclosure in step S311, or if there is no response to the question in step S301, then control goes to step S313 in which the response processing means 310 determines whether there is a program end request for the response processing means 310 or not.

If there is no program end request, then control goes back to step S301 to repeat the processing from step S301. If there is a program end request, then the processing sequence of the response processing means 310 is put to an end.

Control then returns to the main routine shown in FIG. 17. In step S4, the user information acquisition processing means 300 determines whether there is a reception or not based on whether the reception flag 350 is "1" or not. If there is a reception, then control goes to step S5 in which the access image rendering means 302 displays a ship 204 as it moves as shown in FIG. 7. The ship 204 may be displayed as a 2D animated image or as 3D polygons. Then, in step S6, the special action/conversation processing means 320 performs its own processing sequence.

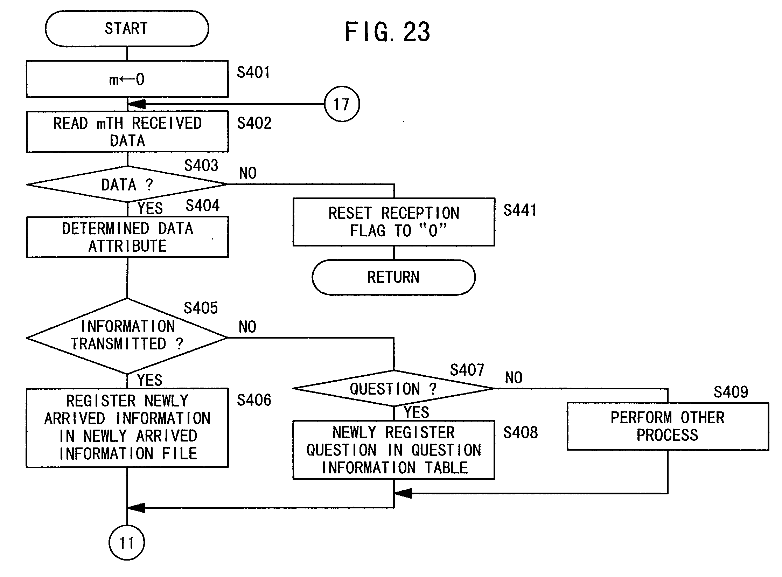

In step S401 shown in FIG. 23, the special action/conversation processing means 320 stores an initial value "0" in an index register m used to read received data, thus initializing the index register m.

In step S402, the special action/conversation processing means 320 reads mth received data from the reception file 352. In step S403, the special action/ conversation processing means 320 determines whether there is mth received data or not. If there is mth received data, then control goes to step S404 in which the special action/conversation processing means 320 determines data attributes of the received data that has been read. The data attributes include an attribute indicating whether the received data is information to be transmitted to the user or a question to be given to the user, and an attribute indicating whether the received data is pleasant or unpleasant information for the user.

In step S405, the special action/conversation processing means 320 determines whether the received data is information to be transmitted to the user or not. If the received data is information to be transmitted to the user, then control goes to step S406 in which the special action/conversation processing means 320 newly registers the received data in the newly arrived information file 328.

If the received data is not information to be transmitted to the user in step S405, then control goes to step S407 in which special action/conversation processing means 320 determines whether the received data is a question to be given to the user or not. If the received data is a question to be given to the user, then control goes to step S408 in which the special action/conversation processing means 320 newly registers the received data in the question information table 338.

If the received data is not a question to be given to the user, then the special action/conversation processing means 320 performs a process according to other data attributes.

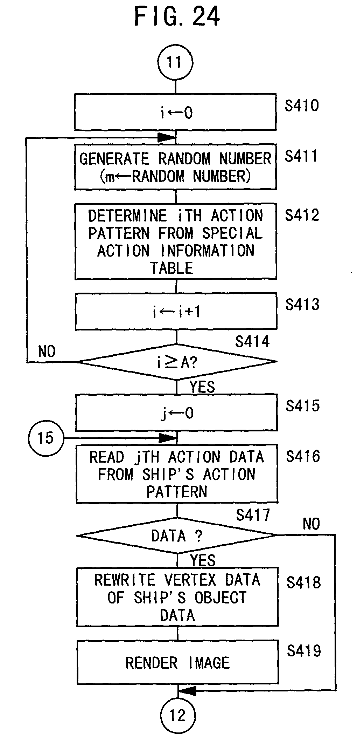

In steps S410 - S414 shown in FIG. 24, the first object rendering means 326 performs its own processing sequence. In step S410, the first object rendering means 326 stores an initial value "0" in the index register i, thus initializing the index register i. In step S411, the first object rendering means 326 generates a random number in order to determine an action pattern with respect to an ith object. The generated random number is stored in the register m.

In step S412, the first object rendering means 326 reads an action pattern of an mth record from the special action information table 324. The action pattern is defined as an ith action pattern.

In step S413, the first object rendering means 326 increments the value of the index register i by "1". Then, in step S414, the first object rendering means 326 determines whether the definition of action patterns for all objects has been finished or not, based on whether or not the value of the index register i is equal to or greater than the number A of objects.

If the value of the index register i is smaller than the number A of objects, then control goes back to step S411 to define a next action pattern. If the value of the index register i is equal to or greater than the number A of objects, then control goes to step S415 in which the first object rendering means 326 stores an initial value "0" in the index register j, thus initializing the index register j. Thereafter, in steps S416 - S419, the access image rendering means 302 performs its own processing sequence.

In step S416, the access image rendering means 302 reads jth action data of the ith action pattern of the ship 204. In step S417, the access image rendering means 302 determines whether jth action data is present or not. If jth action data is present, then control goes to step S418 in which the access image rendering means 302 rewrites the vertex data of ith object data of the ship 204 according to the action data. Thereafter, in step S419, the access image rendering means 302 renders and stores an 3D image with respect to the object of the ship 204 in the frame buffer 84.

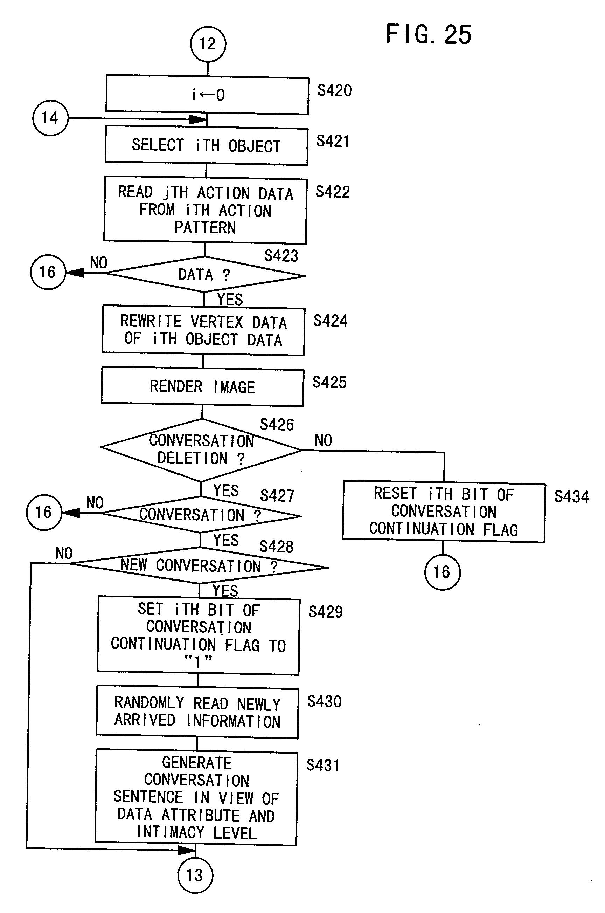

When the processing in step S419 is finished or if there is no action data in step S417, the first object rendering means 326 performs its own processing sequence in steps S420 - S425 shown in FIG. 25.

In step S420, the first object rendering means 326 initializes the index register i. Then, the first object rendering means 326 selects an ith object in step S421. The first object rendering means 326 reads the jth action data from the ith action pattern in step S422.

In step S423, the first object rendering means 326 determines whether the jth action data is present or not. If the jth action data is present, then control goes to step S424 in which the first object rendering means 326 rewrites the vertex data of ith object data according to the action data. Thereafter, in step S425, the first object rendering means 326 renders and stores an 3D image with respect to the ith object in the frame buffer 84.

In steps S426 - S433, the first conversation generating means 330 performs its processing sequence. In step S426, the first conversation generating means 330 determines whether the jth action data includes a conversation deletion or not. The conversation deletion represents an interruption of a conversation made by a character 200 or a switching to a next conversation.

If the jth action data does not include a conversation deletion, then control goes to step S427 in which the first conversation generating means 330 determines whether the jth action data includes a conversation or not, i.e., whether the action is accompanied by a conversation or not.

If the jth action data includes a conversation, then control goes to step S428 in which the first conversation generating means 330 determines whether the conversation is a new conversation or not, based on whether an ith bit of the conversation continuation flag 348 is "0" or not. If the conversation is a new conversation, then control goes to step S429 in which the first conversation generating means 330 sets the ith bit of the conversation continuation flag 348 to "1", indicating that the conversation continues.

In step S430, the first conversation generating means 330 randomly reads newly arrived information registered in the newly arrived information file 328. In step S431, the first conversation generating means 330 generates a conversation message in view of the data attributes of the received data and the intimacy of the object with the user.

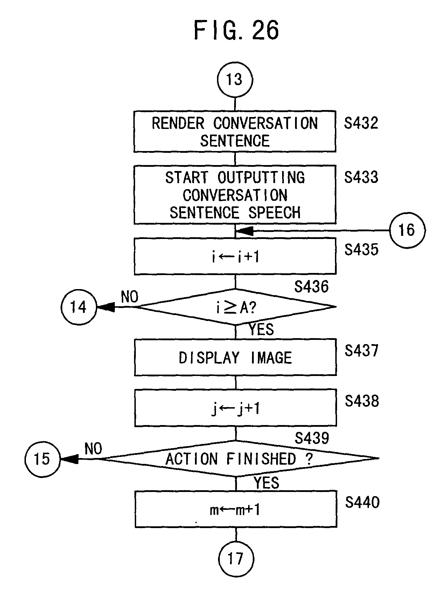

When the processing in step S431 is finished or if the conversation is determined as continuing in step S428, then control goes to step S432 shown in FIG. 26 in which the first conversation generating means 330 renders and stores the generated conversation message, including its utterance frame, in the frame buffer 84. Thereafter, in step S433, the first conversation generating means 330 starts outputting the sound of the conversation message. Therefore, the conversation message is uttered via the speaker 92 of the display monitor 24 substantially in synchronism with the display of an image (including the conversation message) in step S437, to be described below.

When the processing in step S433 is finished or if the action is determined as being not accompanied by a conversation, then control goes to step S435 shown in FIG. 26. If the jth action data is determined as including a conversation deletion in step S426 in FIG. 25, then control goes to step S434 in which the first conversation generating means 330 sets the ith bit of the conversation continuation flag 348 to "0", thus resetting the ith bit. Thereafter, control goes to step S435 shown in FIG. 26.

If jth action data is determined as being not present in step S423 in FIG. 25, then control also goes to step S435 shown in FIG. 26.

In step S435, the first object rendering means 326 increments the value of the index register i by "1". Then, in step S436, the first object rendering means 326 determines whether the image rendering process has been finished for all objects has been finished or not, based on whether or not the value of the index register i is equal to or greater than the number A of objects.

If the value of the index register i is smaller than the number A of objects, then control goes back to step S421 shown in FIG. 25 to perform a rendering process for a next object. If the value of the index register i is equal to or greater than the number A of objects, then control goes to step S437 in which the image displaying means 306 outputs 3D image data stored in the frame buffer 84 to the display monitor 24 to display an image.

In step S438, the first object rendering means 326 increments the value of the index register j by "1". Thereafter, in step S439, the first object rendering means 326 determines whether actions have been displayed and conversations have been outputted with respect to all objects or not.

If actions have not been displayed and conversations have not been outputted with respect to all objects, then control goes back to step S416 shown in FIG. 24 to perform a rendering process based on next action data with respect to all objects (including the object of the ship 204). When the processing in steps S416 - S439 is repeated, the display monitor 24 displays a scene in which the ship 204 arrives at the harbor, together with an overlapping scene in which characters 200 run to the harbor, receive information from the ship 204, converse with the user, and converse with each other based on newly arrived information.

If actions have been displayed and conversations have been outputted with respect to all objects, then control goes to step S440 in which the first object rendering means 326 increments the value of the index register m by "1". Thereafter, control goes back to step S402 to repeat the processing from step S402 shown in FIG. 23.

If there is no mth received data in step S403, then control goes to step S441 in which the special action/ conversation processing means 320 resets the reception flag 350 to "0". The processing sequence of the special action/conversation processing means 320 is now put to an end.

Control returns to the main routine shown in FIG. 17. In step S7, the user information acquisition processing means 300 determines whether there is a program end request for the user information acquisition processing means 300 or not. If there is no program end request, then control goes back to step S3 to repeat the processing from step S3. If there is a program end request, then the processing sequence of the user information acquisition processing means 300 is put to an end.

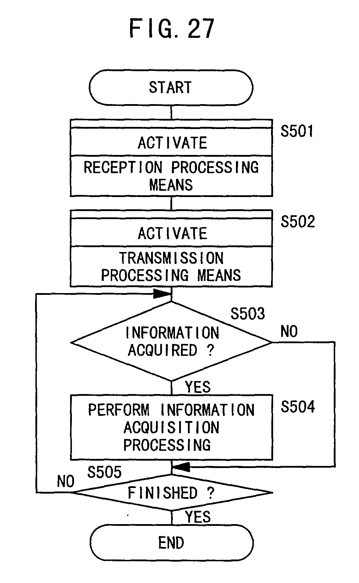

A processing sequence of the information providing means 400 of the server 14 will be described below with reference to FIGS. 27 through 31.

In step S501 shown in FIG. 27, the information providing means 400 activates the reception processing means 404. Then, the information providing means 400 activates the transmission processing means 406 in step S502. The information providing means 400, the reception processing means 404, and the transmission processing means 406 operate in a multitasking fashion. Processing sequences of the reception processing means 404 and the transmission processing means 406 will be described later on.

In step S503, the information providing means 400 determines whether the acquisition of information is required or not, based on whether the present time is a time to acquire predetermined information or not.

If the acquisition of information is required, then control goes to step S504 in which the information acquisition processing means 402 acquires various information from the network 12 and registers the acquired information in the information database 122.

When the processing in step S504 is finished or if the acquisition of information is not required in step S503, then control proceeds to step S505 which determines whether there is a program end request for the information acquisition processing means 400 or not.

If there is no program end request, then control goes back to step S503 to repeat the processing from step S503. If there is a program end request, then the processing sequence of the information providing means 400 is put to an end.

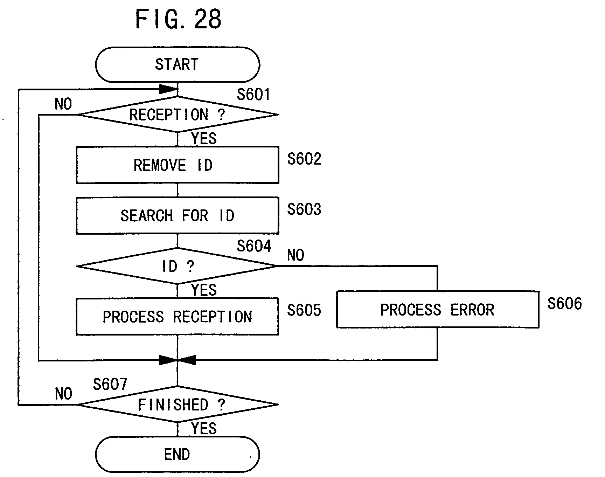

In step S601 shown in FIG. 28, the reception processing means 404 determines whether there is any transmission to the server 14 or not, i.e., whether any reception is detected or not. If a reception is detected, then control goes to step S602 in which the reception processing means 404 removes an ID from the received data.

In step S603, the reception processing means 404 searches the ID management database 124 for the removed ID to determine whether the removed ID is registered in the ID management database 124 or not. In step S604, the reception processing means 404 determines whether the sender is a user registered for the network service.

If the sender is determined as an authentic user in step S604, then control goes to step S605 to process the reception. Specifically, the reception processing means 404 reads a keyword table 340 from the received data, and writes the read keyword table 340 over the keyword table 340 corresponding to the ID, among many keyword tables 340 registered in the keyword database 126, i.e., updates the keyword tables 340. The reception processing means 404 also reads response data from the received data, and newly registers the read response data in a response data group, among many response data groups registered in the response database 128.

If the sender is determined as no authentic user in step S604, then control goes to step S606 in which an error is processed. Specifically, the reception processing means 404 opens a transmission file 408 for the sender who is not an authentic user, and registers an error message "REGISTER AS AUTHENTIC MEMBER", for example, in the transmission file 408.

When the processing in step S605 or step S606 is finished, control goes to step S607 to determine whether there is a program end request for the reception processing means 404. If there is no program end request, then control goes back to step S601 to repeat the processing from step S601. If there is a program end request, then the processing sequence of the reception processing means 404 is put to an end.

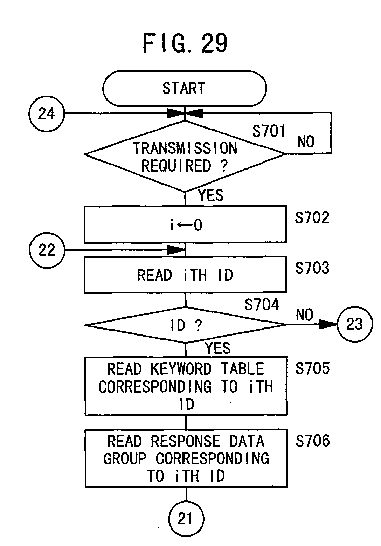

The processing sequence of the transmission processing means 406 will be described below with reference to FIGS. 29 through 31.

In step S701 shown in FIG. 29, the transmission processing means 406 determines whether new information is to be transmitted to each user, based on whether the present time is a time immediately after the information has been acquired in step S504.

If information needs to be transmitted, then control goes to step S702 in which the transmission processing means 406 stores an initial value "0" in an index register i used to retrieve users, thus initializing the index register i.

In step S703, the transmission processing means 406 reads an ith ID from the ID management database 124. Thereafter, in step S704, the transmission processing means 406 determines whether the ith ID is present or not.. If the ith ID is present, then control goes to step S705 in which the transmission processing means 406 reads a keyword table 340 corresponding to the ith ID from the keyword database 126. In step S706, the transmission processing means 406 reads a response data group, i.e., a data group of responses to various questions, corresponding to the ith ID from the response database 128.

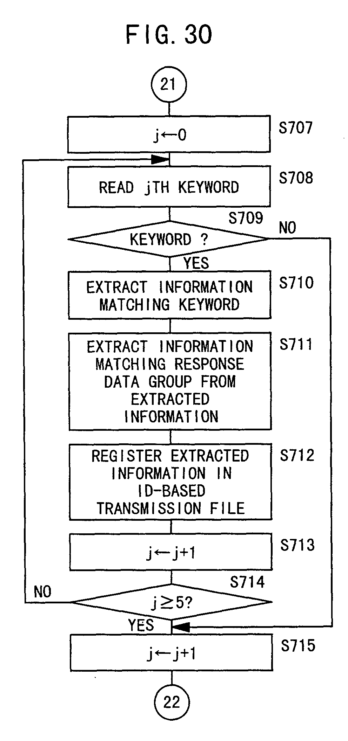

In step S707 shown in FIG. 30, the transmission processing means 406 stores an initial value "0" in an index register j used to retrieve keywords, thus initializing the index register j.

In step S708, the transmission processing means 406 reads a jth keyword from the read keyword table 340. In step S709, the transmission processing means 406 determines whether the jth keyword is present or not. If the jth keyword is present, then control goes to step S710 in which the transmission processing means 406 extracts information matching the keyword from the information database 122.

In step S711, the transmission processing means 406 extracts information matching the contents of the response data group from the extracted information. Thereafter, in step S712, the transmission processing means 406 registers the extracted information together with data attributes in the ID-based transmission file 408.

In step S713, the transmission processing means 406 increments the value of the index register j by "1". Thereafter, in step S714, the transmission processing means 406 determines whether information up to top five keywords that the user is most interested in has been collected or not, based on whether or not the value of the index register j is equal to or greater than 5. If the value of the index register j is smaller than 5, then control goes to step S708 in which the transmission processing means 406 reads a keyword in a next rank, and registers information matching the keyword in the transmission file 408.

If the value of the index register j is equal to or greater than 5, or if the keyword is not present in step S709, then control goes to step S715 in which the transmission processing means 406 increments the value of the index register i by "1". Thereafter, control returns to step S703 shown in FIG. 29 to process a next ID.

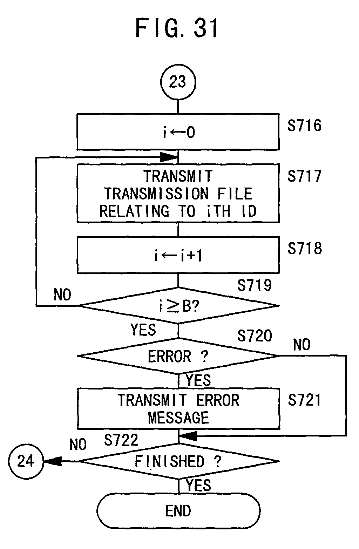

If the processing of all Ids has been finished in step S704, then control goes to step S716 shown in FIG. 31 in which the transmission processing means 406 initializes the index register i.

In step S717, the transmission processing means 406 transmits the transmission file 408 relative to the ith ID to the entertainment apparatus 16 of the user corresponding to the ith ID. After the transmission, control goes to step S718 in which the transmission processing means 406 increments the value of the index register i by "1". Thereafter, in step S719, the transmission processing means 406 determines whether the transmission of information to all users is finished or not, based on whether or not the value of the index register i is equal to or greater than the number B of users.

If the value of the index register i is smaller than the number B of users, then control goes back to step S717 to transmit the corresponding transmission file 408 to a next user. If the value of the index register i is equal to or greater than the number B of users, then control goes to step S720 in which the transmission processing means 406 determines whether an error process is required or not.

The error process is carried out based on whether the reception processing means 404 has opened a transmission file 408 for an error message or not. If the error process is required, then control goes to step S721 in which the transmission processing means 406 transmits an error message registered in the transmission file 408 to the sender.

When the processing in step S721 is finished or if no error process is required in step S720, control goes to step S722 to determine whether there is a program end request for the transmission processing means 406. If there is no program end request, then control goes back to step S701 to repeat the processing from step S701. If there is a program end request, then the processing sequence of the transmission processing means 406 is put to an end.

In the present embodiment, as described above, a keyword table 340 based on a keyword that has been acquired via a conversation between a character 200 displayed on the display monitor 24 and the user, and response data with respect to a question are transmitted to the server 14, and the server 14 extracts information matching the keyword table 340 and a response data group from the user, and transmits the extracted information to the entertainment apparatus 16 of the user. The user can thus exchange information while conversing with the character 200 displayed on the display monitor 24, and can continuously be interested in communication software using the network 12.

Since information received from the server 14 is processed and expressed as a conversation with the character 200 and is temporarily stored in the entertainment apparatus 16, the entertainment apparatus 16 does not need to be continuously connected to the server 14. Thus, the time required to access to the server 14 and the entertainment apparatus 16 can be shortened.

Inasmuch as information received from the server 14 is expressed as a conversation with the character 200, the information may be mainly in the form of text data, and data such as image data which is relatively time-consuming to exchange does not need to be exchanged. This allows the time required to access to the server 14 and the entertainment apparatus 16 to be further shortened.

In the present embodiment, the connection to the server 14 is indicated by an image symbolizing an access, e.g., an image of a ship 204 as it moves, rather than a simple message. Therefore, an element of fun is added to the exchange of information via the network 12.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. A communication system comprising:
a server (14) connected to a network (12);
an entertainment apparatus (16) accessible to and from said server (14) via said network (12); and
a display unit (24) connected to said entertainment apparatus (16);
said entertainment apparatus (16) comprising:
access image rendering means (302) for expressing an access to and from said server (14) when said entertainment apparatus (16) accesses and is accessed by said server (14), with an image symbolizing the access, on said display unit (24).

2. A communication system according to claim 1, wherein said entertainment apparatus (16) comprises user information acquisition processing means for displaying at least one object (200) on said display unit (24) and transmitting response information of a user acquired via a conversation between said object (200) and the user to said server (14), and wherein said server (14) comprises information providing means (400) for extracting information matching the response information of the user from information acquired via said network (12), and transmitting the extracted information to the entertainment apparatus (16) of the user.

3. A communication system according to claim 2, wherein if said conversation is of a question type from said object (200) to said user, then said user information acquisition processing means comprises means for transmitting information including a question from said object (200) and a response from said user, as the response information of said user, to said server (14), and said information providing means (400) comprises means for extracting information matching said response from said extracted information.

4. A communication system according to claim 3, wherein said user information acquisition processing means comprises disclosure permission/inhibition determining means for asking the user about whether said response can be disclosed or not, and transmitting the response information of the user to said server (14) if a disclosure permission from the user is recognized.

5. A communication system according to any one of claims 2 to 4, wherein said user information acquisition processing means comprises:
action/conversation processing means for displaying said at least one object (200) while acting and conversing on said display unit (24);
response processing means for registering the response information of said user with respect to a conversation of said object (200) in a transmission file (308); and
transmission/reception processing means for receiving information from said server (14) and transmitting the information registered in said transmission file (308) to said server (14).

6. A communication system according to claim 5, wherein said action/conversation processing means comprises:
special action/conversation processing means for receiving information that has been received and displaying mainly an action and a conversation to be indicated to the user when the image symbolizing the access to and from said server (14) is displayed; and
normal action/conversation processing means for displaying mainly a normal action and a normal conversation with the user based on information stored in said entertainment apparatus (16).

7. A communication system according to any one of claims 2 to 6, wherein said conversation with the object (200) is accompanied by the outputting of a sound.

8. A communication system according to claim 5, wherein said response processing means comprises means for collecting keywords contained in the response information of the user, generating a table (340) of the collected keywords arranged according to a predetermined rule, and registering said table in the transmission file (308), and wherein said information providing means (400) comprises means for referring to said table (340) contained in said transmission file (308) transmitted from said entertainment apparatus (16) to extract said information.

9. An entertainment apparatus (16) accessible to and from said server (14) via said network (12), with a display unit (24) being connectable to said entertainment apparatus (16), comprising access image rendering means (302) for expressing an access to and from said server (14) when said entertainment apparatus (16) accesses and is accessed by said server (14), with an image symbolizing the access, on said display unit (24).

10. An entertainment apparatus (16) according to claim 9, further comprising user information acquisition processing means for displaying at least one object (200) on said display unit (24), transmitting response information of a user acquired via a conversation between said object (200) and the user to said server (14), and receiving information matching the response information of the user transmitted from said server (14).

11. An entertainment apparatus (16) according to claim 10, wherein if said conversation is of a question type from said object (200) to said user, then said user information acquisition processing means comprises means for transmitting information including a question from said object (200) and a response from said user, as the response information of said user, to said server (14), and receiving the information matching said response transmitted from said server (14).

12. An entertainment apparatus (16) according to claim 11, wherein said user information acquisition processing means comprises disclosure permission/inhibition determining means for asking the user about whether said response can be disclosed or not, and transmitting the response information of the user to said server (14) if a disclosure permission from the user is recognized.

13. An entertainment apparatus (16) according to any one of claims 10 to 12, wherein said user information acquisition processing means comprises:
action/conversation processing means for displaying said at least one object (200) while acting and conversing on said display unit (24);
response processing means for registering the response information of said user with respect to a conversation of said object (200) in a transmission file (308); and
transmission/reception processing means for receiving information from said server (14) and transmitting the information registered in said transmission file (308) to said server (14).

14. An entertainment apparatus (16) according to claim 13, wherein said action/conversation processing means comprises:
special action/conversation processing means for receiving information that has been received and displaying mainly an action and a conversation to be indicated to the user when the image symbolizing the access to and from said server (14) is displayed; and
normal action/conversation processing means for displaying mainly a normal action and a normal conversation with the user based on information stored in said entertainment apparatus (16).

15. An entertainment apparatus (16) according to any one of claims 10 to 14, wherein said conversation with the object (200) is accompanied by the outputting of a sound.

16. An entertainment apparatus (16) according to claim 13, wherein said response processing means comprises means for collecting keywords contained in the response information of the user, generating a table (340) of the collected keywords arranged according to a predetermined rule, and registering said table in the transmission file (308).

17. A recording medium storing a program and data for use in an entertainment apparatus (16) accessible to and from said server (14) via said network (12), said program comprising the step of:
expressing an access to and from said server (14) when said entertainment apparatus (16) accesses and is accessed by said server (14), with an image symbolizing the access, on a display unit (24) connected to said entertainment apparatus (16).

18. A recording medium according to claim 17, wherein said program further comprises the steps of:
displaying at least one object (200) on said display unit (24), transmitting response information of a user acquired via a conversation between said object (200) and the user to said server (14), and receiving information matching the response information of the user transmitted from said server (14).

19. A recording medium according to claim 18, wherein said steps comprise the steps of:
if said conversation is of a question type from said object (200) to said user, transmitting information including a question from said object (200) and a response from said user, as the response information of said user, to said server (14), and receiving the information matching said response transmitted from said server (14).

20. A recording medium according to claim 19, wherein said steps comprise the steps of:
asking the user about whether said response can be disclosed or not, and transmitting the response information of the user to said server (14) if a disclosure permission from the user is recognized.

21. A recording medium according to any one of claims 18 to 20, wherein said steps comprise the steps of:
displaying said at least one object (200) while acting and conversing on said display unit (24);
registering the response information of said user with respect to a conversation of said object (200) in a transmission file (308); and
receiving information from said server (14) and transmitting the information registered in said transmission file (308) to said server (14).

22. A recording medium according to claim 21, wherein said step of displaying comprises the steps of:
receiving information that has been received and displaying mainly an action and a conversation to be indicated to the user when the image symbolizing the access to and from said server (14) is displayed; and
displaying mainly a normal action and a normal conversation with the user based on information stored in said entertainment apparatus (16).

23. A recording medium according to any one of claims 18 to 22, wherein said conversation with the object (200) is accompanied by the outputting of a sound.

24. A recording medium according to claim 21, wherein said step of registering the response information comprises the steps of:
collecting keywords contained in the response information of the user, generating a table (340) of the collected keywords arranged according to a predetermined rule, and registering said table in the transmission file (308).

25. A program readable and executable by a computer, for use in an entertainment apparatus (16) accessible to and from said server (14) via said network (12), said program comprising the step of:
expressing an access to and from said server (14) when said entertainment apparatus (16) accesses and is accessed by said server (14), with an image symbolizing the access, on a display unit (24) connected to said entertainment apparatus (16).

26. A program according to claim 22, further comprising the steps of:
displaying at least one object (200) on said display unit (24), transmitting response information of a user acquired via a conversation between said object (200) and the user to said server (14), and receiving information matching the response information of the user transmitted from said server (14).
